Europäisches Patentamt

European Patent Office

Office européen des brevets

(11) Veröffentlichungsnummer: **0 201 922**
**A1**

## (12) EUROPÄISCHE PATENTANMELDUNG

(21) Anmeldenummer: **86106563.9**

(22) Anmeldetag: **14.05.86**

(51) Int. Cl.⁴: **H02G 15/18** , **F16B 4/00**

(30) Priorität: **17.05.85 DE 3517857**

(43) Veröffentlichungstag der Anmeldung:
**20.11.86 Patentblatt 86/47**

(84) Benannte Vertragsstaaten:
**AT BE CH DE FR GB IT LI NL SE**

(71) Anmelder: **RXS Schrumpftechnik-Garnituren GmbH**
**Profilstrasse 4**
**D-5800 Hagen 1(DE)**

(72) Erfinder: **Winterhoff, Hans, Dipl.-Ing.**
**Seestrasse 2 c**
**D-5800 Hagen 1(DE)**

(74) Vertreter: **Mehl, Ernst, Dipl.-Ing.**
**Postfach 22 01 76**
**D-8000 München 22(DE)**

(54) **Wärmeschrumpfbare Verbindung aus einer Veränderbaren Nut und einem Gegenelement.**

(57) Bei der Erfindung handelt es sich um eine wärmeschrumpfbare Verbindung (V) mit einer längsseitigen Nut (8, 8a, 8b) und einem am Ende verdickten Gegenelement (4, 4a, 4b). Die Nut (8, 8a, 8b) besteht aus bei Wärmezufuhr formbeständigen seitlichen Schenkelteilen (5, 5a, 5b, 7, 7a, 7b) und aus mindestens einem bei Wärmezufuhr an das Gegenelement (4, 4a, 4b) formschlüssig anpaßbarem Schrumpfbereich (SB). Der Schrumpfbereich (SB) im Verbindungbereich (V) erleichtert dabei das Zusammenfügen der Verbindungselemente entlang der zu verbindenden Formteile oder der Längsränder (2, 3) einer Umhüllung (1).

# FIG 1

EP 0 201 922 A1

Wärmeschrumpfbare Verbindung aus einer veränderbaren Nut und einem Gegenelement.

Die Erfindung betrifft eine wärmeschrumpfbare Verbindung, bestehend aus einer Nut und einem am Ende verdickten Gegenelement.

Bei bekannten Verschlußvorrichtungen für längsgeteilte Hüllen aus schrumpfbarem Material, wie zum Beispiel nach der europäischen Patentanmeldung 00 78 416 bestehen die Verschlußelemente entlang der Längsränder aus nicht schrumpffähigem, bei Wärme möglichst nicht verformbarem Material, um unzulässige Verformungen im Verschlußbereich zu vermeiden. Dies führt jedoch dazu, daß die Verschlußelemente bereits bei der Montage fest und zugsicher ineinander verhakt werden müssen. Dabei sind zum Verschließen große Kräfte und unter Umständen spezielle Werkzeuge nötig, um die korrespondierenden Verschlußelemente in ihre Verhakungslage bringen zu können, die gewöhnlich über entsprechende Rasterungen erreichbar ist.

Für vorliegende Erfindung ergibt sich nun die Aufgabe, eine Verbindung für Formteile untereinander oder für längsgeteilte Umhüllungen aus - schrumpfbarem Material zu finden, deren Elemente sich in einfacher Weise zusammenbringen lassen und in geschrumpftem Zustand einen innigen und sicheren Verbund bilden, wobei keine zusätzlichen Montagehilfsmittel benötigt werden sollen. Die gestellte Aufgabe wird nun gemäß der Erfindung mit einer wärmeschrumpfbaren Verbindung der eingangs erläuterten Art dadurch gelöst, daß die Nut aus bei Wärmezufuhr formbeständigen Schenkelteilen und aus mindestens einem bei Wärmezufuhr an das Gegenelement formschlüssig anpaßbarem Schrumpfbereich besteht.

Besondere Vorteile ergeben sich bei der erfindungsgemäßen Verbindung für einzelne, miteinander zu verbindende Formteile oder für einen Verschluß entlang der Längsränder einer wärmeschrumpfbaren Umhüllung besonders dadurch, daß die Verschlußelemente entlang der beiden Verbindungsränder bei der Montage, das heißt beim Zusammenfügen, ohne Hilfsmittel in einfacher und doch bereits gesicherter Weise ineinandergefügt werden können. Dabei ist bereits eine Rasterung gegeben, die unbeabsichtigtes Öffnen während der Montagephase nicht mehr zuläßt. Die Verbindung gemäß der Erfindung ist nun so ausgebildet, daß ihre Verschlußelemente durch Wärmezufuhr, das heißt also beim eigentlichen Schrumpfvorgang, endgültig ihrem eingegebenen Formgedächtnis entsprechend formschlüssig zusammengepreßt werden und zwar in einfacher Weise dadurch, daß im Verschlußbereich zumindest ein Teil - schrumpffähig ausgebildet ist, durch den - schließlich das Zusammenpressen der einzelnen Verschlußelemente erfolgt. Die Verschlußelemente bestehen im wesentlichen aus einer Nut, in welche ein Gegenelement eingefügt wird. Die Nut besitzt nun die Fähigkeit bei Wärmezufuhr einen Teil auf Grund des Formgedächtnisses so zu verändern, daß das eingefügte Gegenelement fest umschlossen wird. In einem Ausführungsbeispiel gemäß der Erfindung erfolgt diese Formveränderung durch Verengung der Nut und in einem zweiten Ausführungsbeispiel durch Bildung einer Hinterschneidung infolge der Rückverformung der Schrumpfbereiche am Ende der beiden Schenkelteile der Nut. Außerdem sind zusätzliche vorteilhafte Ausgestaltungen möglich.

Die Erfindung wird nun anhand von zehn Figuren näher erläutert.

Figur 1 zeigt als Ausführungsbeispiel eine - schrumpfbare Umhüllung mit der prinzipiellen Anordnung der erfindungsgemäßen Verbindung.

Figur 2 verdeutlicht in Ausschnitten die Einzelteile der Verbindung vor Verleihung der - schrumpffähigen Eigenschaften.

Figur 3 zeigt die Nut mit einem - schrumpffähigen Nutgrund.

Figur 4 deutet die Möglichkeiten der Verstärkung des Verbindungsbereiches an.

Figur 5 veranschaulicht die vormontierte Verbindung vor dem Schrumpfvorgang.

Figur 6 erklärt den Endzustand der geschrumpften Verbindung.

Figur 7 deutet die Umkehrung der bisher erläuterten Verbindung an.

Figur 8 zeigt eine weitere Formgebung für ein Gegenelement.

Figur 9 verdeutlicht eine Variante der Verbindung an, bei dem die Schenkelteile der Nut während der Wärmeeinwirkung ihre Form verändern.

Figur 10 zeigt den Endzustand der Verbindung am Ausführungsbeispiel nach Figur 9, die im Endzustand wiederum die anfangs bereits beschriebene Form aufweist.

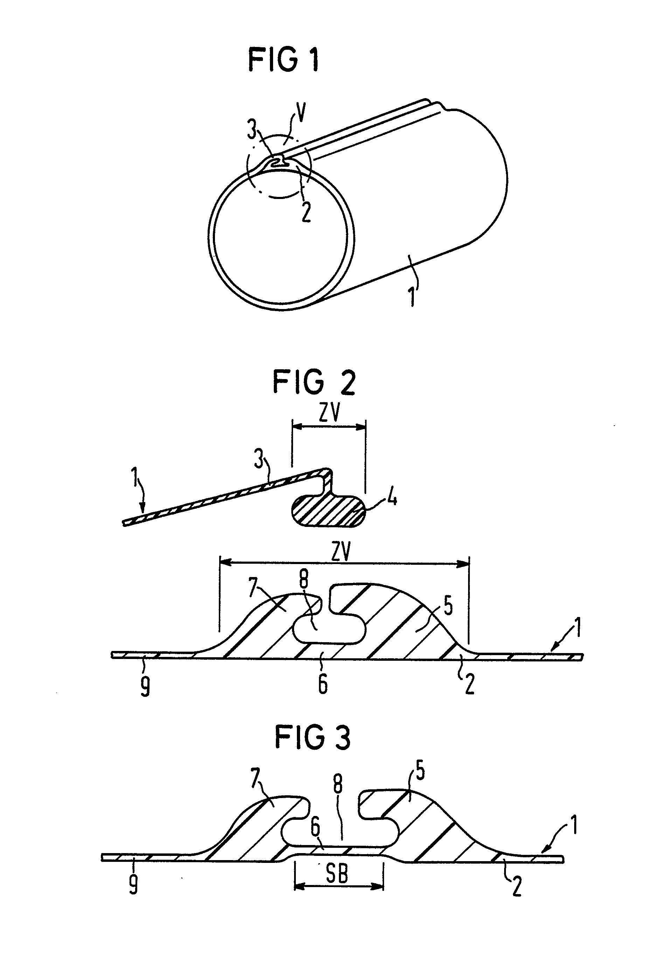

In Figur 1 wird eine wärmeschrumpfbare Verbindung am Beispiel einer wärmeschrumpfbaren Umhüllung 1 gemäß der Erfindung gezeigt, wobei hier lediglich die prinzipielle Anordnung des Verbindungsbereiches V entlang der beiden Längsränder 2 und 3 erkennbar ist. Die Umhüllung 1 besteht aus wärmeschrumpfbarem Material und ist zweckmäßigerweise auf der Innenfläche mit einem Schmelzkleber beschichtet, der zur Haftung und Dichtung dient. Der Verbindungsbereich V wird nun im einzelnen näher diskutiert, wobei es gleichgültig ist, ob die Verbindungselemente gemäß der Erfindung entlang der Längsränder einer Umhüllung oder jeweils als korrespondierende Elemente an verschiedenen miteinander zu verbindenden Formteilen angebracht sind.

Die Figur 2 zeigt nun den Verbindungsbereich V einer Umhüllung 1 in seinen Einzelheiten. Der Längsrand 3 ist an seinem Ende in Form einer doppelseitigen Verdickung als Gegenelement 4 für die Nut 8 ausgebildet. Um die Formbeständigkeit bei Wärmezufuhr gewährleisten zu können, wird dieser Bereich ZV einer Zusatzvernetzung unterzogen. Das Gegenelement 4 ist nach einwärts auf die Nut 8 entlang des zweiten Längsrandes 2 gerichtet. Die Nut 8 wird durch zwei längsverlaufende Schenkelteile 5 und 7 gebildet, wobei die Innenflächen dieser Schenkelteile 5 und 7 nach einwärts, zumindest schräg gegeneinander gerichtet sind, so daß sich eine hinterschnittene Nut 8 bildet. Dadurch ergibt sich jedoch eine sehr schmale Einknüpfstelle für das Gegenelement 4. Da die seitlichen Schenkelteile 5 und 7 ebenfalls bei Wärmeerzeugung möglichst nicht verformbar sein sollen, ist dieser Bereich ZV ebenfalls zumindest höher vernetzt als der schrumpfbare Teil der Umhüllung 1. Die Darstellung in dieser Figur zeigt jedoch bezüglich der Nut 8 den Zustand vor dem Weiten bzw.

Recken, wie er sich auch nach dem Schrumpfvorgang annähernd wieder einstellt. Allerdings ist bei dieser Darstellung das Gegenelement 4 nicht eingeknöpft.

Gemäß der Aufgabe sollen nun die einzelnen Verbindungselemente bei der Erfindung in einfacher Weise ineinanderfügbar sein. Dies zeigt die Figur 3, bei der allerdings nur der Längsrand 2 der Umhüllung 1 dargestellt ist, da das Gegenelement 4 immer in seiner Form beibehalten wird. Um den Zugang für das Gegenelement 4 zu erleichtern, ist ein formschlüssig an das Gegenelement 4 anpaßbarer Schrumpfbereich SB vorgesehen, der in diesem Fall als gedehnter bzw. gereckter und damit schrumpffähiger Nutgrund 6 ausgebildet ist. Durch die Weitung bzw. Reckung dieses Nutgrundes 6 wird der Einführungsspalt der Nut 8 für das Gegenelement 4 vergrößert, so daß dieses ohne Mühe eingedrückt werden kann. Dabei ist die Weitung zweckmäßigerweise so dimensioniert, daß eine geringe Rasterung erhalten bleibt, so daß bei der Vormontage unbeabsichtigtes Öffnen der Verbindung nicht mehr möglich ist. Nachdem das Gegenelement 4 in die Nut 8 eingeführt ist, wird durch Wärmeeinwirkung der Nutgrund 6 durch Schrumpfung wieder zusammengezogen, wobei sich die formschlüssige Anpassung an das eingeführte Gegenelement 4 ergibt.

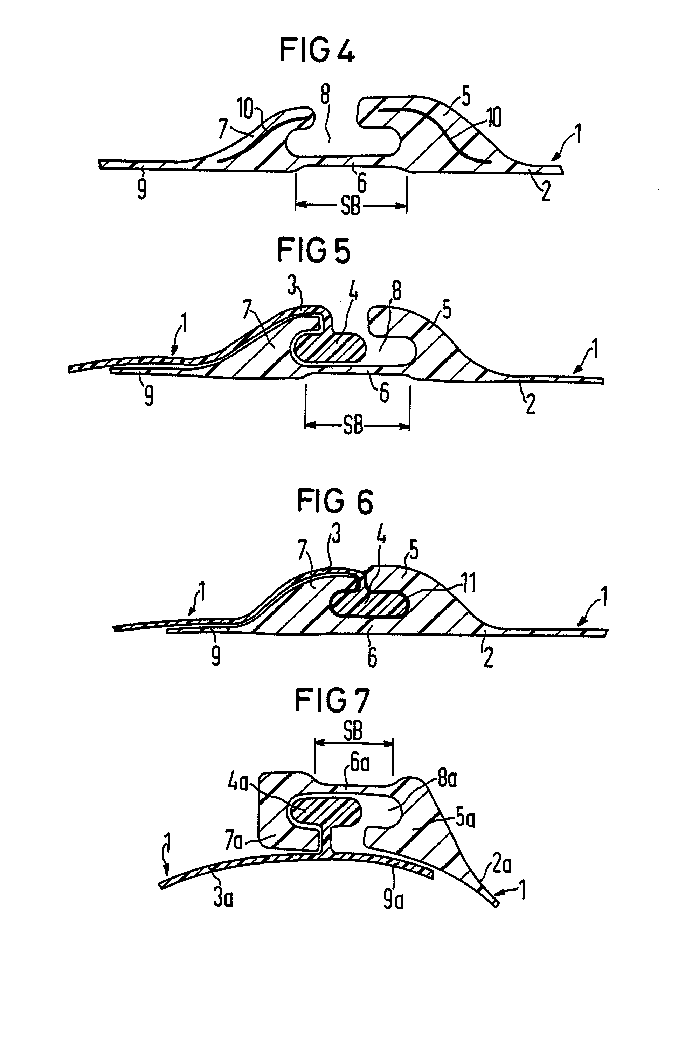

Die Figur 4 verdeutlicht, daß die seitlichen Schenkelteile 5 und 7 zusätzlich mit Verstärkungseinlagen 10 gestützt werden können, um sie besonders widerstandsfähig zu gestalten. Im übrigen sind die Verhältnisse die gleichen wie bei dem vorherigen Beispiel.

Die Figur 5 verdeutlicht das Zusammenfügen der beiden Verbindungselemente im Zustand vor dem Schrumpfen. Dabei wird deutlich, daß zum Beispiel das Schenkelteil 7 niedriger ausgebildet ist als das Schenkelteil 5, so daß sich nach dem Anlegen des Längsrandes 3 trotzdem nach außen hin ein symmetrisches Verschlußbild ergibt. Der Längsrand 2 ist z.B. zu einem Untertritt 9 verlängert, durch den die Dichtungsfläche verlängert wird, wobei sich außerdem ein kontinuierlicher Übergang zwischen dem Verbindungsbereich und dem schrumpfbaren Teil der Umhüllung 1 ergibt. Der Verbindungsbereich befindet sich bei dieser Darstellung noch im ungeschrumpften Zustand.

Die Figur 6 zeigt nun den Verbindungsbereich im geschrumpften Zustand, das heißt, es erfolgte bereits die Rückbildung und damit die Verengung des Nutgrundes 6 bis zur formschlüssigen Kontaktierung des Gegenelementes 4 mit den Innenflächen der Nut 8. Als Dichtungs-und Haftmittel 11 ist zum Beispiel ein Schmelzkleber eingebracht, der bei Wärmezufuhr aktiviert wird und auf diese Weise die Dichtungswirkung erhöht.

In Figur 7 ist der Verbindungsbereich gegenüber dem vorherigen Ausführungsbeispiel gestürzt, dies bedeutet, daß die Nut 8a im außen liegenden Längsrand 2a nach einwärts gerichtet und das Gegenelement 4a am Längsrand 3a auswärts gerichtet angeordnet sind. So werden also bei der Vormontage die Schenkelteile 5a-7a mit der dazwischenliegenden Nut 8a auf das Gegenelement 4a aufgedrückt, wobei auch hier der nun außen liegende Nutgrund 6a den Schrumpfbereich SB aufweist. Dadurch ergibt sich wiederum der geweitete Einführungsspalt, der das gegenseitige Ineinanderfügen erleichtert. Der Schrumpfbereich SB bewirkt beim Schrumpfen durch Erwärmung wiederum die formschlüssige und damit gegenseitige Anpassung der Verbindungselemente, wie es bereits beschrieben wurde. Hier ist zusätzlich von Vorteil, daß der Schrumpfbereich SB des Nutgrundes 6a außen liegt und somit in besonders günstiger Weise für die Schrumpfung erwärmt werden kann. Auch hier ist zur Verbesserung der Dichtungsverhältnisse ein Untertritt 9a vorgesehen.

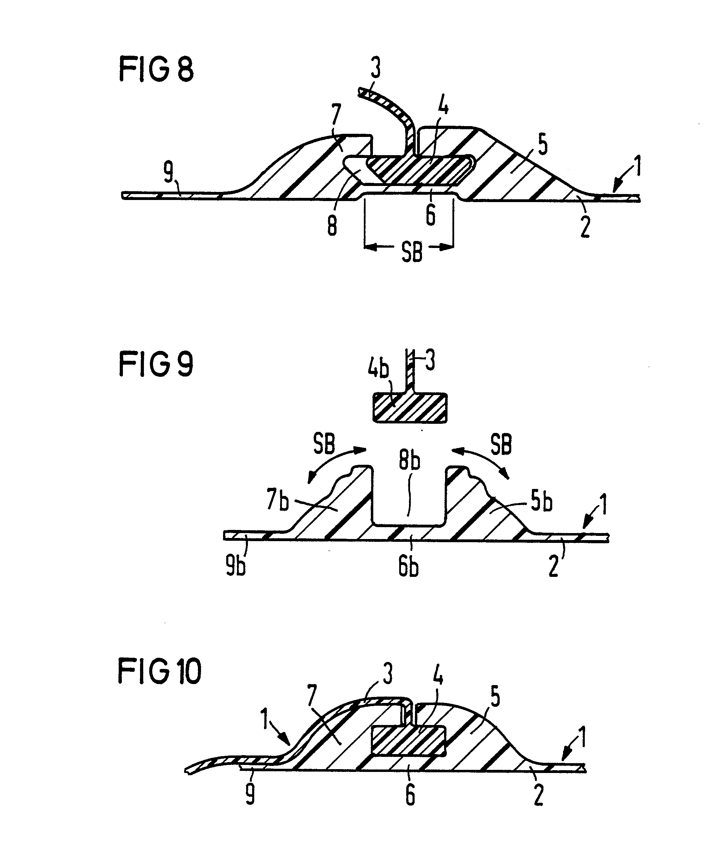

Die Figur 8 veranschaulicht, daß die Ausbildung des Gegenelementes 4 verschiedenartig im Sinne der Erfindung gestaltet werden kann, zum Beispiel hammerförmig mit abgeschrägten Flanken, durch die das Einführen in die Nut 8 zusätzlich erleichtert wird. Die übrigen Verhältnise gleichen den bereits beschriebenen.

In Figur 9 wird ein Ausführungsbeispiel gemäß der Erfindung dargestellt, bei dem der formschlüssig anpaßbare Schrumpfbereich SB nicht als Nutgrund wie bisher, sondern als anpaßbare Enden der beiden seitlichen Schenkelteile 5b und 7b der Nut 8b ausgebildet sind. Die Nut 8b ist hier annähernd als Rechtecknut ausgebildet und gestattet somit die Einführung eines besonders einfachen, jedoch ebenfalls als Verdickung des Längsrandes 3 ausgebildeten Gegenelements 4b. In diesem Ausführungsbeispiel ist eine hammerförmige Ausbildung gewählt. Die beiden Schrumpfbereiche SB, in Form der durch den Reckvorgang vorbehandelten, d.h. mit Formgedächtnis versehenen Enden der seitlichen Schenkelteile 5b und 7b bilden sich bei Wärmeeinwirkung wiederum annähernd zurück und zwar in die vor dem Recken bereits bestandene Ursprungsform, die als hinterschnittene Nut vorgesehen ist. Diese Grundform ist so gestaltet, wie sie bei den vorhergehenden Ausführungsbeispielen bereits beschrieben wurde. Die Rückbildung dieser Schrumpfbereiche SB erfolgt also nach dem Einführen des Gegenelements 4b in die noch offene Nut 8b bei Einwirkung von Wärme.

Die Figur 10 verdeutlicht nun den Zustand des Verbindungsbereiches aus den Verbindungselementen nach Figur 9 nach beendetem Schrumpfvorgang. Die beiden als Schrumpfbereiche SB ausgebildeten Enden der Schenkelteile 5b und 7b sind zurückgebildet und umschließen klammerförmig und rastend das eingeführte Gegenelement 4, wie bei den vorherstehenden Ausführungsbeispielen gemäß der Erfindung, so daß nach dem Schrumpfen äußerlich keine Unterschiede zwischen den Ausführungsbeispielen festzustellen sind.

Damit ist gezeigt, daß sich mit dem Ausführungsbeispiel nach der Erfindung die eingangs gestellte Aufgabe besonders vorteilhaft lösen läßt, wobei nochmals darauf verwiesen wird, daß durch korrespondierende Verbindungselemente an verschiedenen Formteilen die Verbindung dieser Formteile miteinander vorgenommen werden kann. Diese Möglichkeit ist nicht in einer Figur besonders hervorgehoben, da der Unterschied zu einer Umhüllung nur darin besteht, daß nun das Gegenelement (4, 4a, 4b) des ersten Formteiles in die Nut (8, 8a, 8b) des zweiten Formteiles usw. eingebracht wird.

Bezugszeichenliste

1 -Umhüllung

2 -Längsrand

2a -Längsrand

3 -Längsrand

3a -Längsrand

4 -Gegenelement

4a -Gegenelement

4b -Gegenelement

5 -Schenkelteil

5a -Schenkelteil

6 -Nutgrund

6a -Nutgrund

6b -Nutgrund

7 -Schenkelteil

7a -Schenkelteil

8 -Nut

8a -Nut

8b -Nut

9 -Untertritt

9a -Untertritt

9b -Untertritt

10 -Verstärkungseinlage

11 -Dichtungsmittel

SB -Schrumpfbereich

V -Verbindungsbereich

## Ansprüche

1. Wärmeschrumpfbare Verbindung, bestehend aus einer Nut und einem am Ende verdickten Gegenelement, **dadurch gekennzeichnet**, daß die Nut (8, 8a, 8b) aus bei Wärmezufuhr formbeständigen Schenkelteilen (5, 5a, 5b, 7, 7a, 7b) und aus mindestens einem bei Wärmezufuhr an das Gegenelement (4, 4a, 4b) formschlüssig anpaßbarem Schrumpfbereich (SB) besteht.

2. Wärmeschrumpfbare Verbindung nach Anspruch 1, **dadurch gekennzeichnet**, daß die Nut (8, 8a) aus zwei Schenkelteilen (5, 5a, 7, 7a) mit schräg gegeneinander geneigten Innenflächen als Hinterschneidung gebildet ist und daß zwischen diesen beiden Schenkelteilen (5, 5a, 7, 7a) als Schrumpfbereich (SB) ein bei Wärmezufuhr schrumpfender, die Nut (8, 8a) verengbarer Nutgrund (6, 6a) angeordnet ist.

3. Wärmeschrumpfbare Verbindung nach Anspruch 1, **dadurch gekennzeichnet**, daß die Nut (8b) aus zwei formbeständigen Schenkelteilen (5b, 7b) mit nahezu parallelen Innenflächen besteht, wobei die äußeren Enden dieser Schenkelteile (5b, 7b) als nach einwärts schrumpfbare, Hinterschneidungen bildende Schrumpfbereiche (SB) ausgebildet sind.

4. Wärmeschrumpfbare Verbindung nach einem der vorhergehenden Ansprüche, **dadurch gekennzeichnet**, daß die Schenkelteile (5, 5a, 5b, 7, 7a, 7b) einen höheren Vernetzungsgrad aufweisen als die Schrumpfbereiche (SB).

5. Wärmeschrumpfbare Verbindung nach einem der vorhergehenden Ansprüche, **dadurch gekennzeichnet**, daß die Nut (8, 8a, 8b) nach auswärts und das zugehörige Gegenelement (4, 4a, 4b) nach einwärts gerichtet sind.

6. Wärmeschrumpfbare Verbindung nach einem der Ansprüche 1, 2 oder 4, **dadurch gekennzeichnet**, daß die Nut (8a) nach einwärts und das zugehörige Gegenelement (4a) nach auswärts gerichtet sind.

7. Wärmeschrumpfbare Verbindung nach einem der vorhergehenden Ansprüche, **dadurch gekennzeichnet**, daß das Gegenelement (4) knopfförmig ausgebildet ist.

8. Wärmeschrumpfbare Verbindung nach einem der Ansprüche 1 bis 6, **dadurch gekennzeichnet**, daß das Gegenelement (4) hammerförmig ausgebildet ist.

9. Wärmeschrumpfbare Verbindung nach Anspruch 8, **dadurch gekennzeichnet**, daß das Gegenelement (4) abgeschrägte Einführungsflanken aufweist.

10. Wärmeschrumpfbare Verbindung nach einem der vorhergehenden Ansprüche, **dadurch gekennzeichnet**, daß die formbeständigen Schenkelteile - (5, 5a, 7, 7a, 7b) Verstärkungen (10), vorzugsweise aus Metall, aufweisen.

11. Wärmeschrumpfbare Verbindung nach einem der vorhergehenden Ansprüche, **dadurch gekennzeichnet**, daß die Innenflächen der Nut (8, 8a, 8b) mit einem Dichtungsmittel (11), vorzugsweise einem Schmelzkleber, beschichtet sind.

12. Wärmeschrumpfbare Verbindung nach einem der vorhergehenden Ansprüche, **dadurch gekennzeichnet**, daß das Gegenelement (4, 4a, 4b) mit einem Dichtungsmittel (11) vorzugsweise einem Schmelzkleber beschichtet ist.

13. Wärmeschrumpfbare Verbindung nach einem der vorhergehenden Ansprüche, **dadurch gekennzeichnet**, daß die Verbindungselemente inForm der Nut (8, 8a, 8b) und des Gegenelementes (4, 4a, 4b) entlang der Längskanten (2, 3) einer - schlauchförmigen, geteilten Umhüllung (1) angeordnet sind.

14. Wärmeschrumpfbare Verbindung nach einem der Ansprüche 1 bis 12, **dadurch gekennzeichnet**, daß die Verbindungselemente in Form der Nuten (8, 8a, 8b) und von Gegenelementen (4, 4a, 4b) verschiedener Formteile in jeweils korrespondierender Weise ineinandergefügt sind.

## FIG 1

## FIG 2

## FIG 3

## FIG 4

## FIG 5

## FIG 6

## FIG 7

FIG 8

FIG 9

FIG 10

| | **EINSCHLÄGIGE DOKUMENTE** | | EP 86106563.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A,P | GB - A - 2 164 114 (DZIECIELEWSKI) <br> * Zusammenfassung * <br><br> -- | 1 | H 02 G 15/18 <br> F 16 B 4/00 |
| A | DE - B - 2 652 590 (MESSERSCHMITT-BOLKOW-BLOHM) <br> * Fig. 1; Patentanspruch 1 * <br><br> -- | 1 | |
| A | DE - A1 - 2 652 014 (COAL)· <br> * Fig. 3; Patentanspruch 1 * <br><br> -- | 1 | |
| A | EP - A2 - 0 074 280 (RAYCHEM) <br> * Fig. 10 * <br><br> -- | | |
| A | EP - A1 - 0 026 435 (SIEMENS) <br> * Zusammenfassung * <br><br> -- | | **RECHERCHIERTE SACHGEBIETE (Int. Cl.4)** |
| A | DE - A1 - 3 201 108 (SIEMENS) <br><br> ---- | | H 02 G 15/00 <br> F 16 B 4/00 |

Der vorliegende Recherchenbericht wurde für alle Patentansprüche erstellt.

| Recherchenort | Abschlußdatum der Recherche | Prüfer |
|---|---|---|
| WIEN | 12-08-1986 | SCHMIDT |